# EUROPEAN PATENT SPECIFICATION

(11) **EP 0 751 238 B1**
(45) Date of publication and mention of the grant of the patent: **07.01.1999**
(21) Application number: 96303460.8
(22) Date of filing: 15.05.1996
(51) Int. Cl.: C23C 18/12, C23C 26/00

(54) **A method of adhering silica to gold**
Verfahren zum Verkleben von Siliziumdioxid auf Gold
Procédé d'adhésion d'oxyde de silice sur l'or

(30) Priority: 26.06.1995 US 494746
(43) Date of publication of application: 02.01.1997
(73) Proprietor: DOW CORNING CORPORATION, Midland Michigan 48686-0994 (US)
(72) Inventor: Camilletti, Robert Charles, Midland, Michigan 48640 (US); Chandra, Grish, Midland, Michigan 48640 (US); Michael, Keith Winton, Midland, Michigan 48640 (US)
(74) Representative: Kyle, Diana

(56) References cited:
- EP-A- 0 512 717
- US-A- 5 336 532

## Description

The present invention introduces a method of increasing the adhesion between silica and gold wherein the silica and gold are first joined and then annealed in an oxidizing atmosphere.

It is well known that gold does not adhere well to ceramics such as silica. The reason for this lack of adhesion is the differences in bonding exhibited by these materials, i.e., silica adheres to substances by electrostatic bonds whereas gold adheres to substances by shared electron bonds. As such, a direct molecular bond between the materials is believed impossible in the art.

It is often desirable in the electronics industry to use gold metallization and ceramic coatings on devices such as integrated circuits. However, because of the poor adhesion between these materials, delamination and circuit failure can occur.

Numerous approaches have been attempted to solve this problem. For instance, metallic oxides, metallic adhesion layers and adhesives have been applied between the ceramic and the gold to promote adhesion. These approaches, however, each have disadvantages such as cost, complexity, degree of adhesion and electrical characteristics.

In US Patent 4,050,496, a simplified method of bonding the ceramic and gold is taught. However, the heating therein must be conducted at a temperature greater than 800°C. to allow the materials to chemically react. As is obvious, however, this process is disadvantageous in that the high temperatures may also damage the substrate. Moreover, the silica described therein was not derived from hydrogen silsesquioxane resin (H-resin).

We have now unexpectedly found that silica derived from H-resin can be bonded to gold by low temperature annealing in an oxidizing environment.

The present invention introduces a new method of adhering silica to gold. The method comprises joining a gold article and a silica ceramic. The silica ceramic herein is formed by a process comprising heating H-resin to a temperature sufficient to form silica. The joined gold article and silica ceramic is then annealed in an oxidizing atmosphere at a temperature in the range of 50-500°C. for greater than 1 hour.

Our invention is based on discovery that silica derived from H-resin can readily be adhered to gold by low temperature annealing in an oxidizing atmosphere. This was particularly unexpected since the art teaches that this adhesion is not possible unless the silica and gold are annealed at higher temperatures. We postulate that our unexpected discovery is based on the structure or properties of the H-resin and its interaction with the gold.

The first step in the process of the present invention involves joining a gold article and a silica ceramic. This joining is accomplished in any manner desired. For instance, a gold object is simply brought into contact with a silica object. Alternatively, the gold object is formed or deposited in a manner such that it contacts the silica. For instance, a layer of gold is deposited on a silica object by a vapor deposition or sputtering process. Finally, a silica object could be formed or deposited in a manner such that it contacts the gold. For instance, a layer of silica is deposited on a gold object by a vapor deposition or spin-on process.

In a preferred embodiment of our invention, the gold and silica are joined on an electronic device. As used herein, the expression "electronic device" includes, but is not limited to, electronic circuits such as silicon based devices, gallium arsenide based devices, focal plane arrays, opto-electronic devices, photovoltaic cells and wiring boards.

If the gold and silica are on an electronic device, the gold could, for example, take the form of thin film wiring, interconnects or bond pads. Similarly, the silica could, for example, take the form of an interlayer dielectric or a passivating coating. In a more preferred embodiment of this invention, the gold is in the form of a bond pad and the silica is a passivating coating which is used to seal the electronic device.

The gold which is used herein can be very pure (e.g. >99%) or, alternatively, it can be impure or doped with other elements such as metals or oxides. This gold can be formed into any desired shape in any manner desired. Many techniques are known in the art. For example, the gold could be formed by vacuum deposition. That process involves placing the substrate to be coated in a vacuum chamber (having the desired pressure, temperature, plasma, etc,), evacuating the chamber, introducing a gold vapor into the chamber (formed by, for example, placing gold on a hot tungsten filament) and allowing the vapor to deposit on the substrate. Similarly, the gold could be sputtered, deposited by electron beam evaporation, deposited in molten form and the like.

The silica of the present invention is derived from H-resin. This resin is formed by the hydrolysis or partial hydrolysis of HSiX₃, wherein X is a hydrolyzable substituent such as halogen atom (e.g., chlorine, fluorine and bromine); an alkoxy (e.g., methoxy, ethoxy or propoxy) or acyloxy (e.g., acetoxy). The resultant resin has the formula HSi(OH)ₓ(X)_{y}O_{z/2}, in which each X is a hydrolyzable substituent as defined above, x = 0-2, y = 0-2, z = 1-3, x + y + z = 3. As such, the resin may be fully condensed (HSiO_{3/2})ₙ or it may be only partially hydrolyzed (i.e., containing some Si-X) and/or partially condensed (i.e., containing some Si-OH). Although not represented by this structure, the resin may contain a small number (e.g., less than 10%) of silicon atoms which have either 0 or 2 hydrogen atoms attached thereto due to various factors involved in their formation or handling.

Methods for producing the resin are known in the art. For example, it is known to hydrolyze an alkoxy or acyloxy silane with water in an acidic, alcoholic hydrolysis medium. Similarly, US-A 3,615,272 teaches the production of a nearly fully condensed H-resin (which may contain up to 100-300 ppm silanol) by a process comprising hydrolyzing trichlorosilane in a benzenesulfonic acid hydrate hydrolysis medium and then washing the resultant resin with water or aqueous sulfuric acid. Additionally, US-A 5,010,159 provides an alternative method comprising hydrolyzing hydridosilanes in an arylsulfonic acid hydrate hydrolysis medium to form a resin which is then contacted with a neutralizing agent.

It is noted that in a preferred embodiment of this invention, specific molecular weight fractions of the above resin may be used. Such fractions and methods for their preparation are taught in US-A 5,063,267. A preferred fraction comprises material wherein at least 75% of the polymeric species have a molecular weight above 1200 and a more preferred fraction comprises material wherein at least 75% of the polymeric species have a molecular weight between 1200 and 100,000.

The silica may also contain other ceramic oxide precursors. Examples of such precursors include hydrolyzed or partially hydrolyzed compounds of various metals such as aluminum, titanium, zirconium, tantalum, niobium and/or vanadium as well as various non-metallic compounds such as those of boron or phosphorous. These compounds are cohydrolyzed with the H-resin and the mixed hydrolyzate is subsequently pyrolyzed to form mixed ceramic oxide coatings as taught in US-As 4,753,855 and 4,973,526.

The silica may also contain a platinum, rhodium or copper catalyst to increase its rate and extent of conversion to silica as taught in US-A 4,822,697. Generally, any platinum, rhodium or copper compound or complex which can be solubilized will be functional. For instance, a composition such as platinum acetylacetonate, rhodium catalyst RhCl₃[S(CH₂CH₂CH₂CH₃)₂]₃, obtained from Dow Corning Corporation, Midland, Mich., or cupric naphthenate are feasible. These catalysts are generally added in an amount of between 5 to 1000 ppm platinum, rhodium or copper based on the weight of H-resin.

The silica is formed from the H-resin in any manner desired. For instance, the silica can be formed by chemical vapor deposition as taught in US-A 5,165,955. Alternatively, the silica could be formed by a solution approach as described, for example, in US-A 4,756,977. The latter approach is preferred and merely involves applying a liquid comprising the H-resin onto a substrate followed by heating.

If this solution approach is used, the H-resin liquid is generally formed by simply dissolving or suspending the H-resin in a solvent or mixture of solvents. Various facilitating measures such as stirring and/or heat may be used to assist in the dissolution/dispersion. The solvents which may be used in this method include, for example, aromatic hydrocarbons such as benzene or toluene; alkanes such as n-heptane, octane, decane or dodecane; ketones such as methylisobutylketone; cyclic dimethylpolysiloxanes; esters and ethers, in an amount sufficient to dissolve or disperse the above materials to low solids. For instance, enough of the above solvent can be included to form a 0.1-85 weight percent solution.

The substrate is then coated with this liquid by means such as spin, spray, dip or flow coating and the solvent is allowed to evaporate. Any suitable means of evaporation such as simple air drying by exposure to an ambient environment or the application of a vacuum may be used.

Although the above described methods primarily focus on using a solution approach, one skilled in the art will recognize that other equivalent means (eg., melt coating) can also function herein.

The H-resin is then typically converted to silica ceramic by heating it to a sufficient temperature. Generally, the temperature is in the range of 50 to 1000°C. depending on the pyrolysis atmosphere and the preceramic compound. Preferred temperatures are in the range of 50 to 600°C., and more preferably 50-450°C. Heating is generally conducted for a time sufficient to ceramify, generally up to 4 hours (e.g., 1-3 hours), with less than 2 hours being preferred.

The above heating may be conducted at any effective atmospheric pressure from vacuum to superatmospheric and under any effective oxidizing or non-oxidizing gaseous environment such as air, O₂, an inert gas (N₂, etc.), ammonia, amines, moisture and N₂O.

Any method of heating such as the use of a convection oven, rapid thermal processing, hot plate, or radiant or microwave energy is generally functional herein. The rate of heating, moreover, is also not critical, but it is most practical and preferred to heat as rapidly as possible.

Again, the gold and the silica formed by the above processes are then joined. It should be noted that as used herein, this process does include applying H-resin to gold followed by converting it to silica.

In a preferred embodiment of our invention, an integrated circuit having gold bond pads is sealed with a passivation coating of silica derived from H-resin. This is generally accomplished in one of two methods. In the first method, an integrated circuit is coated with the silica, the silica is then etched at the bond pads and the gold is next deposited on the bond pads (and in contact with the silica). In the second method, gold is deposited on the bond pads of an integrated circuit followed by depositing a silica coating and then etching it to expose the gold.

The joined gold and silica are then annealed in an oxidizing atmosphere. Generally, the temperature for annealing is in the range of 50-500°C. Preferably, the temperature is in the range of 100-200°C.

The method used for heating is not critical and any known in the art can be used herein. These include, for example, a convection oven, rapid thermal processing, hot plate or radiant or microwave energy.

The time for the annealing is generally greater than 1 hour. While the annealing may be performed as long as desired, for practical purposes the annealing time is generally in the range of 1-24 hours with a time in the range of 5-20 hours being preferred.

The atmosphere used for annealing is one which can oxidize the silica and the gold. These include, for example, environments such as air, O₂, oxygen plasma, ozone and nitrous oxide. For simplicity, an atmosphere of air is generally used.

The resultant product has the silica firmly attached to the gold. These bonds have been strong enough to pass the Tape Adhesion Test of ASTM Method B3330 using 33,618 pascal tape. Although not wishing to be bound by theory, we postulate that the silica derived from H-resin has the capacity to interact and bond to the gold under the annealing conditions.

If desired, the silica coating may be covered by other coatings such as additional SiO₂ layers, silicon-containing coatings, silicon carbon containing coatings, silicon nitrogen containing coatings, silicon oxygen nitrogen containing coatings and/or silicon nitrogen carbon containing coatings. Such multiple layer coatings are known in the art and many are generally described in US-A 4,756,977. An especially preferred coating is silicon carbide applied by the chemical vapor deposition of silacyclobutane or trimethylsilane.

The following non-limiting examples are provided so that those skilled in the art may understand the invention more fully.

### Examples

A 15 wt% solution of H-resin (made by the method of US-A 3,615,272) was prepared by dissolving the H-resin in cyclic dimethylsiloxanes (Examples 1-8) or n-heptane (Examples 9-10) and storing the mixture for 16 hours.

Silicon wafers, 125 mm diameter, were metallized by sputtering with 200 nm of gold and then exposed to 175°C. in nitrogen.

The wafers were subdivided into smaller groups to assess the impact of various surface cleaning techniques; 1) no cleaning, 2) UV ozone cleaning and 3) plasma cleaning (2 min. of O₂ + 5 min. of Ar).

The wafers were coated immediately after cleaning. The coating was applied by dispensing the H-resin solution though a 0.2 micrometer PTFE filter (point of use) directly onto the metallized wafers. The wafers were then spun at 3000 rpm for 20 seconds to obtain a thickness of approximately 350 nm.

All of the coatings were then converted into silicon oxide coatings by the following process:
1. The coated wafers were placed in a furnace and the temperature was ramped up to 175°C. in nitrogen.
2. The furnace was purged with anhydrous ammonia for 10 minutes.
3. Steam and ammonia were injected into the furnace for 4 hours.
4. The furnace was purged with anhydrous ammonia for 1 hour.
5. The temperature in the furnace was ramped down in anhydrous ammonia until the temperature was less than 100°C.
6. The furnace was purged with nitrogen.

The wafers with the silicon oxide coating were then subjected to the environments listed in Table 1.

The resultant coatings were then tested for adherence to the metallization by a Tape Adhesion Test, ASTM Method B3330 at 25°C. and 35% relative humidity. Three different adhesive strength industrial tapes were used in the tests:
1. 10,775 pascal
2. 24,998 pascal
3. 33,618 pascal
The results are presented in Table 1. Failure of the test is defined as delamination of the silica by the tape. It is noted that the results of the surface cleaning are not presented since no variation in adhesion was detected from the different cleaning techniques.

**Table 1**

| Ex No | Environment | Result |
|---|---|---|
| 1 | As Made | fail-tape 1 |
| 2 | 3 weeks in nitrogen and 1 week in air at room temperature | fail-tape 1 |
| 3 | 100 hours at 121°C. and 100% relative humidity | fail-tape 1 |
| 4 | 100 hours of temperature cycling between 150°C. and -65°C. | pass-tape 3 |
| 5 | 50 hours of temperature cycling between 150°C. and -65°C. | pass-tape 3 |
| 6 | 24 hours at 150°C. in nitrogen | fail-tape 1 |
| 7 | 24 hours at 150°C. in air | pass-tape 3 |
| 8 | Test of Examples 3 and 4 combined | pass-tape 3 |
| 9 | As Made | fail-tape 1 |
| 10 | 24 hours at 150°C, in air | pass-tape 3 |

## Claims

1. A method of adhering silica to gold comprising joining a gold article and a silica ceramic, wherein the silica is formed by a process comprising heating hydrogen silsesquioxane resin to a temperature sufficient to form silica and annealing the joined gold article and silica ceramic in an oxidizing atmosphere at a temperature in the range of 50-500°C. for greater than 1 hour.

2. The method of claim 1 wherein the gold article comprises gold metallization on an electronic device.

3. The method of claim 1 wherein the gold article comprises a gold bond pad.

4. The method of claim 1 wherein the silica ceramic is a silica coating on an electronic device.

5. The method of claim 1 wherein the oxidizing atmosphere contains a gas selected from the group consisting of air, oxygen, ozone, nitrous oxide and oxygen plasma.

6. The method of claim 4 wherein an additional ceramic layer is applied on the silica coating, wherein the additional ceramic layer is selected from the group consisting of SiO₂ coatings, silicon containing coatings, silicon carbon containing coatings, silicon nitrogen containing coatings, silicon oxygen nitrogen containing coatings and silicon nitrogen carbon containing coatings.

7. A method of adhering a silica coating to gold metallization on an electronic device comprising forming gold metallization on an electronic device, applying a coating of hydrogen silsesquioxane resin on the electronic device, wherein the hydrogen silsesquioxane resin is deposited in physical contact with the gold metallization, heating the electronic device to a temperature sufficient to convert the hydrogen silsesquioxane resin into a silica coating and annealing the electronic device in an oxidizing atmosphere at a temperature in the range of 50-500°C. for greater than 1 hour.

8. A method of adhering gold metallization to a silica coating on an electronic device comprising applying a coating of hydrogen silsesquioxane resin on an electronic device, heating the coated electronic device to a temperature sufficient to convert the hydrogen silsesquioxane resin into a silica coating, forming gold metallization on the electronic device, wherein the gold metallization is in physical contact with the silica coating and annealing the electronic device in an oxidizing atmosphere at a temperature in the range of 50-500°C. for greater than 1 hour.

## Patentansprüche

1. Verfahren zum Anhaften von Siliciumdioxid an Gold durch Verbinden eines Gegenstandes aus Gold mit Siliciumdioxidkeramik, wobei das Siliciumdioxid gebildet wird durch ein Verfahren des Erwärmens von Wasserstoffsilsesquioxanharz auf eine zum Ausbilden von Siliciumdioxid ausreichende Temperatur und Glühen des mit Siliciumdioxidkeramik verbundenen Gegenstandes aus Gold in einer oxydierenden Atmosphäre bei einer Temperatur im Bereich von 50-500°C für länger als 1 Stunde.

2. Verfahren nach Anspruch 1, dadurch gekennzeichnet, daß der Gegenstand aus Gold ein mit Gold metallisiertes elektronisches Bauelement ist.

3. Verfahren nach Anspruch 1, dadurch gekennzeichnet, daß der Gegenstand aus Gold eine mit Gold elektrisch leitend verbundene Anschlußfläche ist.

4. Verfahren nach Anspruch 1, dadurch gekennzeichnet, daß die Siliciumdioxidkeramik eine Siliciumdioxidbeschichtung auf einem elektronischen Bauelement ist.

5. Verfahren nach Anspruch 1, dadurch gekennzeichnet, daß die oxydierende Atmosphäre ein aus der aus Luft, Sauerstoff, Ozon, Dinitrogenoxid und Sauerstoffplasma bestehenden Gruppe ausgewähltes Gas enthält.

6. Verfahren nach Anspruch 4, dadurch gekennzeichnet, daß eine zusätzliche keramische Schicht auf die Siliciumdioxidbeschichtung aufgebracht wird, wobei die zusätzliche keramische Schicht aus der aus Siliciumdioxidschichten, siliciumhaltigen Schichten, Silicium-Kohlenstoff enthaltenden Schichten, Silicium-Stickstoff enthaltenden Schichten, Silicium-Sauerstoff-Stickstoff enthaltenden Schichten und Silicium-Stickstoff-Kohlenstoff enthaltenden Schichten bestehenden Gruppe ausgewählt ist.

7. Verfahren zum Anhaften einer Siliciumdioxidschicht an Goldmetallisierung auf einem elektronischen Bauelement durch Ausbilden von Goldmetallisierung auf einem elektronischen Bauelement, Aufbringen einer Beschichtung aus Wasserstoffsilsesquioxanharz auf das elektronische Bauelement, wobei das Wasserstoffsilsesquioxanharz in physikalischem Kontakt mit der Goldmetallisierung abgeschieden wird, Erwärmen des elektronischen Bauelements auf eine zum Umwandeln des Wasserstoffsilsesquioxanharzes in eine Siliciumdioxidschicht ausreichende Temperatur und Glühen des elektronischen Bauelements in einer oxydierenden Atmosphäre bei einer Temperatur im Bereich von 50-500°C für länger als 1 Stunde.

8. Verfahren zum Anhaften einer Goldmetallisierung auf einer Siliciumdioxidschicht auf einem elektronischen Bauelement durch Aufbringen einer Schicht von Wasserstoffsilsesquioxanharz auf ein elektronisches Bauelement, Erwärmen des beschichteten elektronischen Bauelements auf eine zum Umwandeln des Wasserstoffsilsesquioxanharzes in eine Siliciumdioxidschicht ausreichende Temperatur, Ausbilden von Goldmetallisierung auf dem elektronischen Bauelement, wobei die Goldmetallisierung in physikalischem Kontakt mit der Siliciumdioxidschicht steht, und Glühen des elektronischen Bauelements in einer oxydierenden Atmosphäre bei einer Temperatur im Bereich von 50-500°C für länger als 1 Stunde.

## Revendications

1. Procédé pour faire adhérer de la silice à de l'or, comprenant la réunion d'un article en or et d'une céramique de silice, dans lequel la silice est formée par un procédé consistant à chauffer une résine d'hydrogénosilsesquioxane à une température suffisante pour former de la silice et à recuire l'article en or et la céramique de silice réunis dans une atmosphère oxydante à une température dans la gamme de 50 à 500 °C, pendant plus de 1 heure.

2. Procédé selon la revendication 1, dans lequel l'article en or comprend une métallisation d'or sur un dispositif électronique.

3. Procédé selon la revendication 1, dans lequel l'article en or comprend un plot de connexion en or.

4. Procédé selon la revendication 1, dans lequel la céramique de silice est un revêtement de silice sur un dispositif électronique.

5. Procédé selon la revendication 1, dans lequel l'atmosphère oxydante contient un gaz choisi dans le groupe constitué par l'air, l'oxygène, l'ozone, l'oxyde nitreux et un plasma d'oxygène.

6. Procédé selon la revendication 4, dans lequel une couche céramique supplémentaire est appliquée sur le revêtement de silice, la couche céramique supplémentaire étant choisie dans le groupe constitué par les revêtements de SiO₂, les revêtements contenant du silicium, les revêtements contenant du silicium et du carbone, les revêtements contenant du silicium et de l'azote, les revêtements contenant du silicium, de l'oxygène et de l'azote, et les revêtements contenant du silicium, de l'azote et du carbone.

7. Procédé pour faire adhérer un revêtement de silice sur une métallisation d'or sur un dispositif électronique, consistant à former une métallisation d'or sur un dispositif électronique, à appliquer un revêtement de résine d'hydrogénosilsesquioxane sur le dispositif électronique, la résine d'hydrogénosilsesquioxane étant déposée en contact physique avec la métallisation d'or, à chauffer le dispositif électronique à une température suffisante pour convertir la résine d'hydrogénosilsesquioxane en un revêtement de silice et à recuire le dispositif électronique dans une atmosphère oxydante à une température dans la gamme de 50 à 500 °C, pendant plus de 1 heure.

8. Procédé pour faire adhérer une métallisation d'or sur un revêtement de silice sur un dispositif électronique, consistant à appliquer un revêtement de résine d'hydrogénosilsesquioxane sur un dispositif électronique, à chauffer le dispositif électronique revêtu à une température suffisante pour convertir la résine d'hydrogénosilsesquioxane en un revêtement de silice, à former une métallisation d'or sur le dispositif électronique, la métallisation d'or étant en contact physique avec le revêtement de silice, et à recuire le dispositif électronique dans une atmosphère oxydante à une température dans la gamme de 50 à 500 °C, pendant plus de 1 heure.
